# EUROPEAN PATENT SPECIFICATION

(11) **EP 3 142 432 B1**
(45) Date of publication and mention of the grant of the patent: **09.03.2022**
(21) Application number: 15789520.2
(22) Date of filing: 05.05.2015
(51) Int. Cl.: H04W 56/00, H04W 72/00, H04W 84/18, H04W 88/04

(54) **SYNCHRONIZATION PROCESSING METHOD AND USER EQUIPMENT**
SYNCHRONISIERUNGSVERARBEITUNGSVERFAHREN UND BENUTZERGERÄT
PROCÉDÉ DE TRAITEMENT DE SYNCHRONISATION ET ÉQUIPEMENT D'UTILISATEUR

(30) Priority: 06.05.2014 CN 201410188908
(43) Date of publication of application: 15.03.2017
(73) Proprietor: Datang Mobile Communications Equipment Co., Ltd., Beijing 100085 (CN)
(72) Inventor: CHEN, Wenhong, Beijing 100191 (CN); GAO, Qiubin, Beijing 100191 (CN); ZHAO, Rui, Beijing 100191 (CN); PENG, Ying, Beijing 100191 (CN)
(74) Representative: dompatent von Kreisler Selting Werner - Partnerschaft von Patent- und Rechtsanwälten mbB
(86) International application number: PCT/CN2015/078274
(87) International publication number: WO 2015/169208

(56) References cited:
- WO-A1-2015/006082
- CN-A- 103 702 408
- CN-A- 104 244 316
- CN-A- 104 469 926
- US-A1- 2011 222 515
- CATT: "Discussion on D2D synchronization procedure", 3GPP DRAFT; R1-141198, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Shenzhen, China; 20140331 - 20140404 22 March 2014 (2014-03-22), XP050813697, Retrieved from the Internet: URL:http://www.3gpp.org/ftp/tsg_ran/WG1_RL 1/TSGR1_76b/Docs/ [retrieved on 2014-03-22]
- HUAWEI ET AL: "Design considerations for D2DSS", 3GPP DRAFT; R1-141595, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Shenzhen, China; 20140331 - 20140404 30 March 2014 (2014-03-30), XP050787262, Retrieved from the Internet: URL:http://www.3gpp.org/ftp/Meetings_3GPP_ SYNC/RAN1/Docs/ [retrieved on 2014-03-30]
- ERICSSON: "Synchronization Signals and Channel Design for D2D Discovery and Communication", 3GPP DRAFT; R1-135903 D2D SYNCHRONIZATION SIGNALS - UPDATED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 13 November 2013 (2013-11-13), XP050735512, Retrieved from the Internet: URL:http://www.3gpp.org/ftp/Meetings_3GPP_ SYNC/RAN/RAN1/Docs/ [retrieved on 2013-11-13]

## Description

### TECHNICAL FIELD

The present disclosure relates to the field of radio communication technology, in particular to a synchronization processing method and a user equipment (UE).

### BACKGROUND

A device-to-device (D2D) technology refers to a technology where data may be transmitted, within a short range, between adjacent terminals via a direct link, without being forwarded by a central node (i.e., a base station).

A long-term evolution (LTE) D2D technology refers to D2D discovery and D2D communication operating at an LTE authorized frequency and controlled by an LTE network. On one hand, it may be used to take full advantages of the D2D technology, and on the other hand, some drawbacks occurring for the traditional D2D technology, e.g., uncontrollable interference, may also be overcome through the LTE network. Due to the introduction of the LTE D2D characteristics, the LTE technology has been developed from a pure radio mobile cellular communication technology toward a universal connectivity technology.

Before the D2D transmission, a UE needs to perform synchronization. It may acquire a synchronization reference for transmitting a D2D signal in accordance with a synchronization signal from a reference synchronization source. During the transmission of the D2D signal, the UE may transmit a synchronization signal, so as to provide a synchronization reference for the other UE. Further, the UE may also transmit a synchronization channel at the same time, so as to deliver some resource configuration information or information about the synchronization sources.

The D2D synchronization signal is transmitted on synchronization resources occurring periodically, and an occurrence period of the synchronization resources is called as a synchronization resource period. In the case of being transmitted, the synchronization channel is also transmitted within an identical synchronization resource, and the resources for the synchronization signal are associated with the resources for the synchronization channel. For the UE outside a coverage area, its synchronization resource period is usually preconfigured, i.e., a constant value written into the UE in advance. For the UE within the coverage area, usually a constant synchronization resource period is also preconfigured for it. In the case that the UE moves out of the network coverage area, the preconfigured synchronization resource period may be used. However, in the case that the UE is within the network coverage area, it may use a synchronization resource period other than the preconfigured synchronization resource period.

In some network coverage scenarios, the UE within the coverage area may forward its synchronization information to the UE outside the coverage area through the synchronization signal and/or synchronization channel, so as to enable the UE in proximity to the coverage area to transmit the D2D signal on the basis of the synchronization within the coverage area, thereby to reduce the interference between the UE within the coverage area and the UE outside the coverage area through the synchronous transmission. At this time, the UE outside the coverage area may continue to forward the synchronization signal, so as to provide the synchronization reference for the other UEs in proximity to the coverage area, thereby to achieve the network synchronization in a larger coverage area.

The UE outside the coverage area may transmit the synchronization signal on a preconfigured synchronization resource while the UE within the coverage area may transmit the synchronization signal on a synchronization resource configured at, or preagreed with, a network side. This mismatching of the synchronization resource may lead to asynchronization between the UE within the coverage area and the UE outside the coverage area. As a result, synchronization accuracy between the UE within the coverage area and the UE outside the coverage area will be degraded.

A reference document (US 2011/222515 A1) discloses methods and apparatus related to support rapid synchronization between groups of wireless communications devices.

A further reference document (CATT: "Discussion on D2D synchronization procedure", 3GPP DRAFT; R1-141198, 3rdGENERATION PARTNERSHIP PROJECT (3GPP)) 1) specifies synchronization procedure for inter-cell, in partial network coverage and outside network coverage.

### SUMMARY

The present disclosure has solved the afore-described problem as defined in the attached claims. An object of the present disclosure is to provide a synchronization processing method and a UE, so as to improve the synchronization accuracy between the UE within the coverage area and the UE outside the coverage area.

The invention is as defined in the independent claims. Further aspects are disclosed in the dependent claims.

### BRIEF DESCRIPTION OF THE DRAWINGS

Fig.1 is a flow chart of a synchronization processing method according to one embodiment of the present disclosure;
Fig.2 is a schematic view showing a D2D network architecture;
Fig.3 is a schematic view showing a UE according to one embodiment of the present disclosure; and
Fig.4 is a schematic view showing another UE according to one embodiment of the present disclosure.

### DETAILED DESCRIPTION OF THE EMBODIMENTS

The present disclosure will be described hereinafter in conjunction with the drawings.

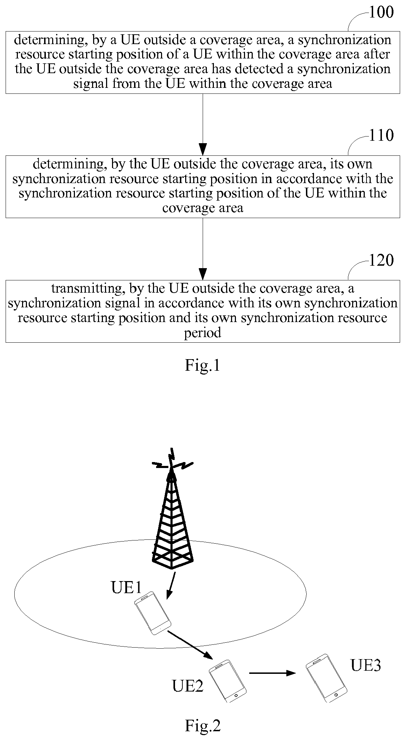

As shown in Fig.1, the present disclosure provides in some embodiments a synchronization processing method, which includes the following steps.

Step 100: determining, by a UE outside a coverage area, a synchronization resource starting position of a UE within the coverage area after the UE outside the coverage area has detected a synchronization signal from the UE within the coverage area.

In the embodiments of the present disclosure, the UE outside the coverage area may be a UE outside a coverage area of a cellular network, or a UE outside a coverage area of a Wireless Local Area Network (WLAN), or a UE outside a coverage area of a cluster head, or a UE outside a coverage area of any other wired or wireless network, i.e., the types of the UE outside the coverage area are not particularly defined herein.

In the embodiments of the present disclosure, the definition of the UE within the coverage area may refer to the above description of the UE outside the coverage area.

Step 110: determining, by the UE outside the coverage area, its own synchronization resource starting position in accordance with the synchronization resource starting position of the UE within the coverage area.

Step 120: transmitting, by the UE outside the coverage area, a synchronization signal in accordance with its own synchronization resource starting position and its own synchronization resource period.

The synchronization resource period of the UE outside the coverage area is preset, e.g., in the UE outside the coverage area.

Step 120 may include, but not limited to, transmitting, by the UE outside the coverage area, the synchronization signal from its own synchronization resource starting position in each of its own synchronization resource periods.

According to the synchronization processing method in the embodiments of the present disclosure, the UE outside the coverage area determines, upon receiving the synchronization signal from the UE within the coverage area, the synchronization resource starting position of the UE within the coverage area in accordance with the received synchronization signal, and determine its own synchronization resource starting position in accordance with the synchronization resource starting position of the UE within the coverage area, so as to enable a synchronization resource for the UE outside the coverage area to match a synchronization resource for the UE within the coverage area, thereby to improve the synchronization accuracy between the UE within the coverage area and the UE outside the coverage area.

Optionally, the number of subframes between the synchronization resource starting position of the UE outside the coverage area and the synchronization resource starting position of the UE within the coverage area is a constant value, or determined in accordance with a preconfigured synchronization resource starting position of the UE outside the coverage area. Usually, this constant value is an integer. For example, the constant value may be 0, i.e., the synchronization resource starting position of the UE outside the coverage area and the synchronization resource starting position of the UE within the coverage area are located at adjacent sub frames. At this time, in Step 110, the UE outside the coverage area may determine its own synchronization resource starting position in accordance with the synchronization resource starting position of the UE within the coverage area and the number of the subframes therebetween.

The synchronization resource starting position of the UE outside the coverage area may be located behind or before the synchronization resource starting position of the UE within the coverage area.

In the case that the synchronization resource starting position of the UE outside the coverage area is located before the synchronization resource starting position of the UE within the coverage area, in Step 120, the UE outside the coverage area may, starting from a next synchronization resource period, transmit the synchronization signal in accordance with its own synchronization resource starting position and its own synchronization resource period.

The UE outside the coverage may, but not limited to, determine a resource for the detected synchronization signal from the UE within the coverage area as the synchronization resource starting position of the UE within the coverage area. In the case that the UE within the coverage area transmits the synchronization signal many times in one synchronization resource period, the UE outside the coverage area may determine a resource for a first synchronization signal from the UE within the coverage area detected in one synchronization resource period as the synchronization resource starting position of the UE within the coverage area.

Optionally, the UE outside the coverage area may acquire a synchronization reference in accordance with the detected synchronization signal from the UE within the coverage area, and determine the acquired synchronization reference as a synchronization reference to be used by the UE outside the coverage area for transmitting the synchronization signal.

The synchronization reference is a time-domain synchronization reference and/or a frequency-domain synchronization reference. The time-domain synchronization reference is used for timing, i.e., determining a starting position of a subframe, and the frequency-domain synchronization reference is used for determining a frequency point to be used for transmitting a signal or data.

Optionally, the UE outside the coverage area may acquire a synchronization reference in accordance with the detected synchronization signal from the UE within the coverage area, and determine the acquired synchronization reference as a synchronization reference to be used by the UE outside the coverage area for transmitting a data signal.

Optionally, in the case that the UE outside the coverage area, upon acquiring the synchronization reference in accordance with the detected synchronization signal from the UE within the coverage area, is capable of identifying the UE within the coverage area, it may determine the UE within the coverage area as a reference synchronization source.

Upon detecting the synchronization signal from the UE within the coverage area, the UE outside the coverage area determines a synchronization resource period of the UE within the coverage area, and detects continuously the synchronization signal from the UE within the coverage are in accordance with the synchronization resource starting position and the synchronization resource period of the UE within the coverage area.

The step of detecting continuously the synchronization signal from the UE within the coverage area in accordance with the synchronization resource starting position and the synchronization resource period of the UE within the coverage area may include, but not limited to, detecting, in each synchronization resource period of the UE within the coverage area, the synchronization signal from the UE within the coverage area in a time window including the synchronization resource starting position of the UE within the coverage area. A size of the time window may be set according to the practical need, and thus it is not particularly defined herein.

According to the embodiments of the present disclosure, the synchronization resource transmitting period of the UE within the coverage area is carried in the synchronization signal from the UE within the coverage area, so as to enable the UE outside the coverage area to determine the synchronization resource transmitting period of the UE within the coverage area, thereby to track and detect the synchronization signal from the UE within the coverage area. Because the UE outside the coverage area may determine the synchronization resource starting position and the synchronization resource period of the UE within the coverage area, it is able to simplify a tracking process of the synchronization signal, and improve the tracking accuracy thereof.

Based on the above, the UE outside the coverage area may acquire the synchronization reference in accordance with the synchronization signal transmitted by the UE within the coverage area and detected recently at least once, and update the synchronization reference used by itself for transmitting the synchronization signal and/or the synchronization reference used by itself for transmitting the data signal in accordance with the acquired the synchronization reference.

Optionally, the UE outside the coverage area may acquire the synchronization reference in accordance with the synchronization signal transmitted by the UE within the coverage area and detected recently at least once, and determine the acquired synchronization reference as the synchronization reference used by itself for transmitting the synchronization signal and/or the synchronization reference used by itself for transmitting the data signal.

According to the embodiments of the present disclosure, the UE outside the coverage area may acquire the synchronization reference in accordance with the synchronization signal transmitted by the UE within the coverage area and detected recently at least once, so as to adjust its own synchronization reference in time, thereby to improve the synchronization accuracy.

Optionally, the synchronization resource period of the UE within the coverage area may be an integral multiple of the synchronization resource period of the UE outside the coverage area, or the synchronization resource period of the UE outside the coverage area may be an integral multiple of the synchronization resource period of the UE within the coverage area.

The UE outside the coverage area may determine the synchronization resource period of the UE within the coverage area in, but not limited to, the following modes.

Mode 1: the UE outside the coverage area may determine the synchronization resource period of the UE within the coverage area in accordance with synchronization resource period information carried in the detected synchronization signal. The synchronization signal may be a synchronization sequence, e.g., a D2D synchronization signal (D2DSS).

Mode 2: the UE outside the coverage area may detect a synchronization channel from the UE within the coverage area, and determine the synchronization resource period of the UE within the coverage area in accordance with synchronization resource period information carried in the detected synchronization channel. The synchronization channel may be, but limited to, a Physical D2D Synchronization Channel (PD2DSCH). The synchronization channel and the synchronization signal are transmitted together, usually within an identical sub frame. The information in the synchronization signal and the synchronization channel are used together to determine the synchronization reference.

Mode 3: the UE outside the coverage area may detect, in accordance with the synchronization resource starting position of the UE within the coverage area, the synchronization signal of the UE within the coverage area in each candidate synchronization resource period of the UE within the coverage area, and determine the candidate synchronization resource period for the detected synchronization signal of the UE within the coverage area as the synchronization resource period of the UE within the coverage area.

The synchronization resource period information may indicate a specific value of the synchronization resource period, or a multiple relationship between the synchronization resource period of the UE within the coverage area and the synchronization resource period of the UE outside the coverage area.

Mode 3 differs from mode 1 in that, in mode 1, the UE outside the coverage area acquires directly the synchronization resource period of the UE within the coverage area from the synchronization channel, while in mode 3, the UE outside the coverage area determines the synchronization resource period of the UE within the coverage area by blind-detecting different periods.

In the case that the synchronization resource period information indicates that there is the multiple relationship between the synchronization resource period of the UE within the coverage area and the synchronization resource period of the UE outside the coverage area, the synchronization resource periods preconfigured for the UE within the coverage area and the UE outside the coverage area are identical.

The UE within the coverage area transmits synchronization signal duration information, which is carried in the synchronization signal to be transmitted. At this time, the UE outside the coverage area determines a duration of the synchronization signal from the UE within the coverage area in one synchronization resource period in accordance with the synchronization signal duration information carried in the detected synchronization signal, so as to, in the case of detecting continuously the synchronization signal from the UE within the coverage area, detects the synchronization signal from the UE within the coverage area in each synchronization resource period in accordance with the duration. Alternatively, the synchronization signal duration information is carried in the synchronization channel to be transmitted. At this time, the UE outside the coverage area detects the synchronization channel from the UE within the coverage area, and determines a duration of the synchronization signal from the UE within the coverage area in one synchronization resource period in accordance with synchronization signal duration information carried in the detected synchronization channel, so as to, in the case of detecting continuously the synchronization signal from the UE within the coverage area, detects the synchronization signal from the UE
within the coverage area in each synchronization resource period of the UE within the coverage area in accordance with the duration.

The synchronization signal duration information may be used to indicate the duration of the synchronization signal in one synchronization resource period, e.g., times of the synchronization signal transmitted in one synchronization resource period.

The synchronization processing method in the embodiments of the present disclosure may be applied to a D2D scenario, and also to any other communication systems.

The synchronization processing method will be described hereinafter by taking the D2D scenario in Fig.2 as an example.

In Fig.2, UE1 is a D2D UE within the coverage area, and UE2 and UE3 are D2D UEs outside the coverage area.

The synchronization resource period and the synchronization resource starting position may be configured by a network side for UE1 through high-layer signaling. For example, configurations in Table 1 may be indicated at the network side using 10-bit high-layer signaling (0-1023).

**Table 1**

| Configuration index value | Synchronization resource period | Synchronization resource starting subframe index |
|---|---|---|
| 0-99 | 100ms | 0-99 |
| 100-299 | 200ms | 0-199 |
| 300-799 | 500ms | 0-499 |
| 800-1023 | - | - |

It should be appreciated that, the synchronization resource starting position of UE1 may also be preagreed with the network side.

In Table 1, the synchronization resource starting position is indicated by a subframe index. It should be appreciated that, the synchronization resource starting position may also be indicated by a subframe number or an Orthogonal Frequency Division Multiplexing (OFDM) symbol index.

Based on the above configurations, the transmission and processing of synchronization information will be described as follows.

UE1 may transmit the synchronization signal periodically on a corresponding synchronization resource in accordance with the synchronization resource period and the synchronization resource starting position configured by the network side. For example, in the case that an index value configured by the network side is 249, UE1 may transmit the synchronization signal in a period of 200ms from a ninth subframe of a radio frame 14, as shown in Table 1. The synchronization signal from the UE1 has a preagreed bandwidth, e.g., six Physical Resource Blocks (PRBs) in the middle may be used to transmit the synchronization signal. UE1 may also transmit the synchronization channel on the synchronization resource, and the synchronization resource period information of the UE1 may be carried in the synchronization channel. For example, UE1 may indicate the synchronization resource period through 2-bit signaling of PD2DSCH (i.e., the synchronization resource period information) as shown in Table 2.

**Table 2**

| Configuration index | Synchronization resource period |
|---|---|
| 00 | 100ms |
| 01 | 200ms |
| 10 | 500ms |
| 11 | - |

The resource for transmitting the synchronization channel is fixedly associated with the source for transmitting the synchronization signal.

It should be appreciated that, UE1 may also carry the synchronization resource period information in the synchronization signal to be transmitted.

UE2 may detect the synchronization signal and the synchronization channel from the UE1 on a bandwidth of UE1 for transmitting the synchronization information (the synchronization signal and the synchronization channel), and acquire the synchronization reference in accordance with the detected synchronization signal. The synchronization reference includes the time-domain synchronization reference (for timing) and/or the frequency-domain synchronization reference (for determining a frequency point).

UE2 may determine the synchronization resource starting position of UE1 in accordance with the detected synchronization signal from UE1, and determine the synchronization resource period of UE1 in accordance with the detected synchronization channel. To be specific, UE2 may determine a subframe of the detected synchronization signal from UE1 as a synchronization resource starting subframe position of UE1. UE2 may acquire the synchronization resource period of UE1 in accordance with the 2-bit synchronization resource period information in the synchronization channel (PD2DSCH). For example, in the case that the 2-bit synchronization resource period information is 01, the current synchronization resource period of UE1 may be 200ms, as shown in Table 2.

UE2 may determine a synchronization subframe, which is located M (M=2) subframes behind the synchronization resource subframe position of UE1, as its own synchronization resource subframe starting position, and transmit its own synchronization signal using the determined synchronization reference. The synchronization signal may be transmitted by UE2 at a certain period, and this period may be the synchronization resource period preconfigured in UE2, e.g., 50ms.

As mentioned above, UE2 may detect the synchronization signal of UE1 on the synchronization resource in each synchronization resource period of UE1 in accordance with the synchronization resource starting position and the synchronization resource period (200ms) of UE1, acquire the synchronization reference in accordance with the synchronization signal transmitted by UE1 and detected recently, and update the synchronization reference desired for transmitting the synchronization signal subsequently. To be specific, UE2 may detect the synchronization signal of UE1 at a resource adjacent to the synchronization resource of UE1 every 200ms to acquire the synchronization reference, and update and adjust the synchronization reference for transmitting the synchronization signal in the following 200ms (four synchronization resource periods of UE2) accordingly, so as to ensure the synchronization with UE1.

Further, the synchronization reference acquired by UE2 in accordance with the synchronization signal of UE1 detected recently at least once may also be used to update the synchronization reference desired for transmitting the data signal subsequently.

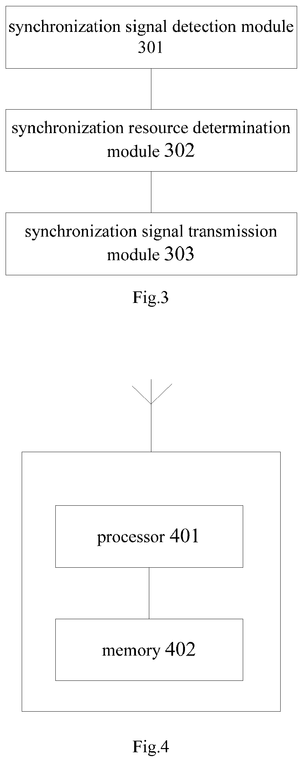

Based on an identical inventive concept, the present disclosure further provides in some embodiment a UE outside a coverage area. As shown in Fig.3, the UE outside the coverage area includes: a synchronization signal detection module 301 configured to determine a synchronization resource starting position of a UE within the coverage area after the UE outside the coverage area has detected a synchronization signal from the UE within the coverage area; a synchronization resource determination module 302 configured to determine its own synchronization resource starting position in accordance with the synchronization resource starting position of the UE within the coverage area; and a synchronization signal transmission module 303 configured to transmit a synchronization signal in accordance with its own synchronization resource starting position and its own synchronization resource period.

According to the embodiments of the present disclosure, the UE outside the coverage area determines, upon receiving the synchronization signal from the UE within the coverage area, the synchronization resource starting position of the UE within the coverage area in accordance with the received synchronization signal, and determine its own synchronization resource starting position in accordance with the synchronization resource starting position of the UE within the coverage area, so as to enable a synchronization resource for the UE outside the coverage area to match a synchronization resource for the UE within the coverage area, thereby to improve the synchronization accuracy between the UE within the coverage area and the UE outside the coverage area.

Optionally, the number of subframes between the synchronization resource starting position of the UE outside the coverage area and the synchronization resource starting position of the UE within the coverage area is a constant value, or determined in accordance with a preconfigured synchronization resource starting position of the UE outside the coverage area.

The synchronization signal detection module is further configured to: determine a synchronization resource period of the UE within the coverage area; and detect continuously the synchronization signal from the UE within the coverage area in accordance with the synchronization resource starting position and the synchronization resource period of the UE within the coverage area.

Optionally, in the case of synchronization tracking, the synchronization signal transmission module is further configured to: acquire a synchronization reference in accordance with the synchronization signal transmitted by the UE within the coverage area and detected recently at least once; and determine a synchronization reference used by itself for transmitting the synchronization signal and/or a synchronization reference used by itself for transmitting a data signal in accordance with the acquired the synchronization reference.

In the case of determining the synchronization resource period of the UE within the coverage area, the synchronization signal detection module is configured to: determine the synchronization resource period of the UE within the coverage area in accordance with synchronization resource period information carried in the detected synchronization signal; or detect a synchronization channel from the UE within the coverage area, and determine the synchronization resource period of the UE within the coverage area in accordance with synchronization resource period information carried in the detected synchronization channel; or detect the synchronization signal from the UE within the coverage area in accordance with the synchronization resource starting position of the UE within the coverage area and each candidate synchronization resource period of the UE within the coverage area, and determine the candidate synchronization resource period of the detected synchronization signal from the UE within the coverage area as the synchronization resource period of the UE within the coverage area.

Optionally, the synchronization resource period of the UE within the coverage area is an integral multiple of the synchronization resource period of the UE outside the coverage area.

Optionally, the synchronization signal detection module is further configured to: determine a duration of the synchronization signal from the UE within the coverage area in one synchronization resource period in accordance with synchronization signal duration information carried in the detected synchronization signal, so as to, in the case of detecting continuously the synchronization signal from the UE within the coverage area, detect the synchronization signal from the UE within the coverage area in each synchronization resource period in accordance with the duration; or detect a synchronization channel from the UE within the coverage area, and determine a duration of the synchronization signal from the UE within the coverage area in one synchronization resource period in accordance with synchronization signal duration information carried in the detected synchronization channel, so as to, in the case of detecting continuously the synchronization signal from the UE within the coverage area, detect the synchronization signal from the UE within the coverage area in each synchronization resource period in accordance with the duration.

Based on an identical inventive concept, the present disclosure further provides in some embodiments a UE outside a coverage area. As shown in Fig.4, the UE outside the coverage area includes: a processor 401 configured to execute a computer program, so as to determine a synchronization resource starting position of a UE within the coverage area after the UE outside the coverage area has detected a synchronization signal from the UE within the coverage area, determine a synchronization resource starting position of the UE outside the coverage area in accordance with the synchronization resource starting position of the UE within the coverage area, and transmit a synchronization signal in accordance with the synchronization resource starting position and a synchronization resource period of the UE outside the coverage area; and a memory 402 configured to store therein codes for the computer program.

According to the embodiments of the present disclosure, the UE outside the coverage area determines, upon receiving the synchronization signal from the UE within the coverage area, the synchronization resource starting position of the UE within the coverage area in accordance with the received synchronization signal, and determine its own synchronization resource starting position in accordance with the synchronization resource starting position of the UE within the coverage area, so as to enable a synchronization resource for the UE outside the coverage area to match a synchronization resource for the UE within the coverage area, thereby to improve the synchronization accuracy between the UE within the coverage area and the UE outside the coverage area.

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory, Compact Disc Read-Only Memory (CD-ROM) and optical memory) including computer-readable program codes.

The present disclosure is described with reference to the flow charts and/or block diagrams showing the method, device (system) and computer program product according to the embodiments of the present disclosure. It should be appreciated that each process and/or block, or combinations thereof, in the flow charts and/or block diagrams may be implemented via computer program commands. These computer program commands may be applied to a general-purpose computer, a special-purpose computer, an embedded processor or any other processor of programmable data processing equipment, so as to form a machine, thereby to obtain the means capable of effecting the functions specified in one or more processes in the flow charts and/or one or more blocks in the block diagrams in accordance with the commands executed by the computer or the processor of the other programmable data processing equipment.

These computer program commands may also be stored in a computer-readable memory capable of guiding the computer or the other programmable data processing equipment to work in a special manner, so as to form a product including a command device capable of effecting the functions specified in one or more processes in the flow charts and/or one or more blocks in the block diagrams.

These computer program commands may also be loaded onto a computer or the other programmable data processing equipment, so as to perform a series of operations thereon and generate the processings implemented by the computer, thereby to provide the steps capable of effecting the functions specified one or more processes in the flow charts and/or one or more blocks in the block diagrams in accordance with the instructions.

## Claims

1. A synchronization processing method, comprising steps of:
determining, by a User Equipment, UE,
outside a coverage area, a synchronization resource starting position of a UE within the coverage area after the UE outside the coverage area has detected a synchronization signal from the UE within the coverage area (100);
determining, by the UE outside the coverage area, its own synchronization resource starting position in accordance with the synchronization resource starting position of the UE within the coverage area (110); and
transmitting, by the UE outside the coverage area, a synchronization signal in accordance with its own synchronization resource starting position and its own synchronization resource period (120),
**characterized in that** subsequent to detecting, by the UE outside the coverage area, the synchronization signal from the UE within the coverage area, the synchronization processing method further comprises:
determining, by the UE outside the coverage area, a synchronization resource period of the UE within the coverage area; and
detecting, by the UE outside the coverage area, continuously the synchronization signal from the UE within the coverage area in accordance with the synchronization resource starting position and the synchronization resource period of the UE within the coverage area,
wherein the step of determining, by the UE outside the coverage area, the synchronization resource period of the UE within the coverage area comprises:
determining, by the UE outside the coverage area, the synchronization resource period of the UE within the coverage area in accordance with synchronization resource period information carried in the detected synchronization signal; or
detecting, by the UE outside the coverage area, a synchronization channel from the UE within the coverage area, and determining the synchronization resource period of the UE within the coverage area in accordance with synchronization resource period information carried in the detected synchronization channel.

2. The synchronization processing method according to claim 1, wherein the number of subframes between the synchronization resource starting position of the UE outside the coverage area and the synchronization resource starting position of the UE within the coverage area is a constant value, or determined in accordance with a preconfigured synchronization resource starting position of the UE outside the coverage area.

3. The synchronization processing method according to claim 1, further comprising:
acquiring, by the UE outside the coverage area, a synchronization reference in accordance with the synchronization signal transmitted by the UE within the coverage area and detected recently at least once; and
determining, by the UE outside the coverage area, a synchronization reference used by itself for transmitting the synchronization signal and/or a synchronization reference used by itself for transmitting a data signal in accordance with the acquired synchronization reference.

4. The synchronization processing method according to claim 1, wherein the synchronization resource period of the UE within the coverage area is an integral multiple of the synchronization resource period of the UE outside the coverage area.

5. The synchronization processing method according to claim 1, further comprising:
determining, by the UE outside the coverage area, a duration of the synchronization signal from the UE within the coverage area in one synchronization resource period in accordance with synchronization signal duration information carried in the detected synchronization signal, wherein the step of detecting continuously the synchronization signal from the UE within the coverage area comprises detecting the synchronization signal from the UE within the coverage area in each synchronization resource period in accordance with the duration; or
detecting, by the UE outside the coverage area, a synchronization channel from the UE within the coverage area, and determining a duration of the synchronization signal from the UE within the coverage area in one synchronization resource period in accordance with synchronization signal duration information carried in the detected synchronization channel, wherein the step of detecting continuously the synchronization signal from the UE within the coverage area comprises detecting the synchronization signal from the UE within the coverage area in each synchronization resource period in accordance with the duration.

6. A User Equipment, UE, outside a coverage area, comprising:
a synchronization signal detection module (301) configured to determine a synchronization resource starting position of a UE within the coverage area after the UE outside the coverage area has detected a synchronization signal from the UE within the coverage area;
a synchronization resource determination module (302) configured to determine its own synchronization resource starting position in accordance with the synchronization resource starting position of the UE within the coverage area; and
a synchronization signal transmission module (303) configured to transmit a synchronization signal in accordance with its own synchronization resource starting position and its own synchronization resource period,
**characterized in that** the synchronization signal detection module (301) is further configured to:
determine a synchronization resource period of the UE within the coverage area; and
detect continuously the synchronization signal from the UE within the coverage area in accordance with the synchronization resource starting position and the synchronization resource period of the UE within the coverage area,
wherein in the case of determining the synchronization resource period of the UE within the coverage area, the synchronization signal detection module (301) is configured to:
determine the synchronization resource period of the UE within the coverage area in accordance with synchronization resource period information carried in the detected synchronization signal; or
detect a synchronization channel from the UE within the coverage area, and determine the synchronization resource period of the UE within the coverage area in accordance with synchronization resource period information carried in the detected synchronization channel.

7. The UE outside the coverage area according to claim 6, wherein the number of subframes between the synchronization resource starting position of the UE outside the coverage area and the synchronization resource starting position of the UE within the coverage area is a constant value, or determined in accordance with a preconfigured synchronization resource starting position of the UE outside the coverage area.

8. The UE outside the coverage area according to claim 6, wherein the synchronization signal transmission module (303) is further configured to:
acquire a synchronization reference in accordance with the synchronization signal transmitted by the UE within the coverage area and detected recently at least once; and
determine a synchronization reference used by itself for transmitting the synchronization signal and/or a synchronization reference used by itself for transmitting a data signal in accordance with the acquired synchronization reference.

9. The UE outside the coverage area according to claim 6, wherein the synchronization resource period of the UE within the coverage area is an integral multiple of the synchronization resource period of the UE outside the coverage area.

10. The UE outside the coverage area according to claim 6, wherein the synchronization signal detection module (301) is further configured to:
determine a duration of the synchronization signal from the UE within the coverage area in one synchronization resource period in accordance with synchronization signal duration information carried in the detected synchronization signal, and in the case of detecting continuously the synchronization signal from the UE within the coverage area, detect the synchronization signal from the UE within the coverage area in each synchronization resource period in accordance with the duration; or
detect a synchronization channel from the UE within the coverage area, and determine a duration of the synchronization signal from the UE within the coverage area in one synchronization resource period in accordance with synchronization signal duration information carried in the detected synchronization channel, and in the case of detecting continuously the synchronization signal from the UE within the coverage area, detect the synchronization signal from the UE within the coverage area in each synchronization resource period in accordance with the duration.

11. A synchronization processing method, comprising steps of:
determining, by a User Equipment, UE,
outside a coverage area, a synchronization resource starting position of a UE within the coverage area after the UE outside the coverage area has detected a synchronization signal from the UE within the coverage area (100);
determining, by the UE outside the coverage area, its own synchronization resource starting position in accordance with the synchronization resource starting position of the UE within the coverage area (110); and
transmitting, by the UE outside the coverage area, a synchronization signal in accordance with its own synchronization resource starting position and its own synchronization resource period (120),
**characterized in that** subsequent to detecting, by the UE outside the coverage area, the synchronization signal from the UE within the coverage area, the synchronization processing method further comprises:
determining, by the UE outside the coverage area, a synchronization resource period of the UE within the coverage area; and
detecting, by the UE outside the coverage area, continuously the synchronization signal from the UE within the coverage area in accordance with the synchronization resource starting position and the synchronization resource period of the UE within the coverage area,
wherein the step of determining, by the UE outside the coverage area, the synchronization resource period of the UE within the coverage area comprises:
detecting, by the UE outside the coverage area, the synchronization signal from the UE within the coverage area in accordance with the synchronization resource starting position of the UE within the coverage area and each candidate synchronization resource period of the UE within the coverage area, and determining the candidate synchronization resource period of the detected synchronization signal from the UE within the coverage area as the synchronization resource period of the UE within the coverage area.

12. The synchronization processing method according to claim 11, wherein the number of subframes between the synchronization resource starting position of the UE outside the coverage area and the synchronization resource starting position of the UE within the coverage area is a constant value, or determined in accordance with a preconfigured synchronization resource starting position of the UE outside the coverage area.

13. The synchronization processing method according to claim 11, further comprising:
acquiring, by the UE outside the coverage area, a synchronization reference in accordance with the synchronization signal transmitted by the UE within the coverage area and detected recently at least once; and
determining, by the UE outside the coverage area, a synchronization reference used by itself for transmitting the synchronization signal and/or a synchronization reference used by itself for transmitting a data signal in accordance with the acquired synchronization reference.

14. A User Equipment, UE, outside a coverage area, comprising:
a synchronization signal detection module (301) configured to determine a synchronization resource starting position of a UE within the coverage area after the UE outside the coverage area has detected a synchronization signal from the UE within the coverage area;
a synchronization resource determination module (302) configured to determine its own synchronization resource starting position in accordance with the synchronization resource starting position of the UE within the coverage area; and
a synchronization signal transmission module (303) configured to transmit a synchronization signal in accordance with its own synchronization resource starting position and its own synchronization resource period,
**characterized in that** the synchronization signal detection module (301) is further configured to:
determine a synchronization resource period of the UE within the coverage area; and
detect continuously the synchronization signal from the UE within the coverage area in accordance with the synchronization resource starting position and the synchronization resource period of the UE within the coverage area,
wherein in the case of determining the synchronization resource period of the UE within the coverage area, the synchronization signal detection module (301) is configured to:
detect the synchronization signal from the UE within the coverage area in accordance with the synchronization resource starting position of the UE within the coverage area and each candidate synchronization resource period of the UE within the coverage area, and determine the candidate synchronization resource period of the detected synchronization signal from the UE within the coverage area as the synchronization resource period of the UE within the coverage area.

15. The UE outside the coverage area according to claim 14, wherein the number of subframes between the synchronization resource starting position of the UE outside the coverage area and the synchronization resource starting position of the UE within the coverage area is a constant value, or determined in accordance with a preconfigured synchronization resource starting position of the UE outside the coverage area.

## Patentansprüche

1. Synchronisierungsverarbeitungsverfahren mit den folgenden Schritten:
Bestimmen, durch ein außerhalb eines Erfassungsbereichs befindliches Benutzergerät, UE, einer Synchronisierungsressourcenstartposition eines innerhalb des Erfassungsbereichs befindlichen UE, nachdem das außerhalb des Erfassungsbereichs befindliche UE ein Synchronisierungssignal von dem innerhalb des Erfassungsbereichs befindlichen UE erkannt hat (100);
Bestimmen, durch das außerhalb des Erfassungsbereichs befindliche UE, der eigenen Synchronisierungsressourcenstartposition entsprechend der Synchronisierungsressourcenstartposition des innerhalb des Erfassungsbereichs befindlichen UE (110); und
Übertragen, durch das außerhalb des Erfassungsbereichs befindliche UE, eines Synchronisierungssignals entsprechend der eigenen Synchronisierungsressourcenstartposition und der eigenen Synchronisierungsressourcenperiode (120),
**dadurch gekennzeichnet, dass** das Synchronisierungsverarbeitungsverfahren nach dem Erkennen des Synchronisierungssignals des innerhalb des Erfassungsbereichs befindlichen UE durch das außerhalb des Erfassungsbereichs befindliche UE, ferner die folgenden Schritte aufweist:
Bestimmen, durch das außerhalb des Erfassungsbereichs befindliche UE, einer Synchronisierungsressourcenperiode des innerhalb des Erfassungsbereichs befindlichen UE; und
kontinuierliches Detektieren, durch das außerhalb des Erfassungsbereichs befindliche UE, des Synchronisierungssignals des innerhalb des Erfassungsbereichs befindlichen UE entsprechend der Synchronisierungsressourcenstartposition und der Synchronisierungsressourcenperiode des innerhalb des Erfassungsbereichs befindlichen UE,
wobei der Schritt des Bestimmens der Synchronisierungsressourcenperiode des innerhalb des Erfassungsbereichs befindlichen UE durch das außerhalb des Erfassungsbereichs befindliche UE die folgenden Schritte aufweist:
Bestimmen, durch das außerhalb des Erfassungsbereichs befindliche UE, der Synchronisierungsressourcenperiode des innerhalb des Erfassungsbereichs befindlichen UE entsprechend in dem detektierten Synchronisierungssignal übertragenen Synchronisierungsressourcenperiodeninformationen; oder
Detektieren, durch das außerhalb des Erfassungsbereichs befindliche UE, eines Synchronisierungskanals von dem innerhalb des Erfassungsbereichs befindlichen UE, und Bestimmen der Synchronisierungsressourcenperiode des innerhalb des Erfassungsbereichs befindlichen UE entsprechend in dem detektierten Synchronisierungssignal übertragenen Synchronisierungsressourcenperiodeninformationen.

2. Synchronisierungsverarbeitungsverfahren nach Anspruch 1, bei welchem die Anzahl von Subframes zwischen der Synchronisierungsressourcenstartposition des außerhalb des Erfassungsbereichs befindlichen UE und der Synchronisierungsressourcenstartposition des innerhalb des Erfassungsbereichs befindlichen UE ein konstanter Wert ist, oder entsprechend einer vorkonfigurierten Synchronisierungsressourcenstartposition des außerhalb des Erfassungsbereichs befindlichen UE bestimmt wird.

3. Synchronisierungsverarbeitungsverfahren nach Anspruch 1, ferner mit den folgenden Schritten:
Erfassen, durch das außerhalb des Erfassungsbereichs befindliche UE, einer Synchronisierungsreferenz entsprechend dem von dem innerhalb des Erfassungsbereichs befindlichen UE übertragenen und kürzlich mindestens ein Mal detektierten Synchronisierungssignal; und
Bestimmen, durch das außerhalb des Erfassungsbereichs befindliche UE, einer Synchronisierungsreferenz, welche es selbst zum Übertragen des Synchronisierungssignals verwendet, und/oder einer Synchronisierungsreferenz, welche es selbst zum Übertragen eines Datensignals entsprechend der erfassten Synchronisierungsreferenz verwendet.

4. Synchronisierungsverarbeitungsverfahren nach Anspruch 1, bei welchem die Synchronisierungsressourcenperiode des innerhalb des Erfassungsbereichs befindlichen UE ein ganzzahliges Vielfaches der Synchronisierungsressourcenperiode des außerhalb des Erfassungsbereichs befindlichen UE ist.

5. Synchronisierungsverarbeitungsverfahren nach Anspruch 1, ferner mit den folgenden Schritten:
Bestimmen, durch das außerhalb des Erfassungsbereichs befindliche UE, einer Dauer des Synchronisierungssignals von dem innerhalb des Erfassungsbereichs befindlichen UE in einer Synchronisierungsressourcenperiode entsprechend in dem detektierten Synchronisierungssignal übertragenen Synchronisierungssignaldauerinformationen, wobei der Schritt des kontinuierlichen Detektierens des Synchronisierungssignals von dem innerhalb des Erfassungsbereichs befindlichen UE das Detektieren des Synchronisierungssignals von dem innerhalb des Erfassungsbereichs befindlichen UE in jeder Synchronisierungsressourcenperiode entsprechend der Dauer aufweist; oder
Detektieren, durch das außerhalb des Erfassungsbereichs befindliche UE, eines Synchronisierungskanals von dem innerhalb des Erfassungsbereichs befindlichen UE, und Bestimmen einer Dauer des Synchronisierungssignals des innerhalb des Erfassungsbereichs befindlichen UE in einer Synchronisierungsressourcenperiode entsprechend in dem detektierten Synchronisierungskanal übertragenen Synchronisierungssignaldauerinformationen, wobei der Schritt des kontinuierlichen Detektierens des Synchronisierungssignals des innerhalb des Erfassungsbereichs befindlichen UE das Detektieren des Synchronisierungssignals des innerhalb des Erfassungsbereichs befindlichen UE in jeder Synchronisierungsressourcenperiode entsprechend der Dauer aufweist.

6. Außerhalb eines Erfassungsbereichs befindliches Benutzergerät, UE, mit:
einem Synchronisierungssignaldetektionsmodul (301), das dazu ausgebildet ist, eine Synchronisierungsressourcenstartposition eines innerhalb des Erfassungsbereichs befindlichen UE zu bestimmen, nachdem das außerhalb des Erfassungsbereichs befindliche UE ein Synchronisierungssignal von dem innerhalb des Erfassungsbereichs befindlichen UE erkannt hat;
einem Synchronisierungsressourcenbestimmungsmodul (302), das dazu ausgebildet ist, die eigene Synchronisierungsressourcenstartposition entsprechend der Synchronisierungsressourcenstartposition des innerhalb des Erfassungsbereichs befindlichen UE zu bestimmen; und
einem Synchronisierungssignalübertragungsmodul (303), das dazu ausgebildet ist, ein Synchronisierungssignal entsprechend der eigenen Synchronisierungsressourcenstartposition und der eigenen Synchronisierungsressourcenperiode zu übertragen,
**dadurch gekennzeichnet, dass** das Synchronisierungssignaldetektionsmodul (301) ferner dazu ausgebildet ist:
eine Synchronisierungsressourcenperiode des innerhalb des Erfassungsbereichs befindlichen UE zu bestimmen; und
das Synchronisierungssignal von dem innerhalb des Erfassungsbereichs befindlichen UE entsprechend der Synchronisierungsressourcenstartposition und der Synchronisierungsressourcenperiode des innerhalb des Erfassungsbereichs befindlichen UE kontinuierlich zu detektieren,
wobei im Falle des Bestimmens der Synchronisierungsressourcenperiode des innerhalb des Erfassungsbereichs befindlichen UE das Synchronisierungssignaldetektionsmodul (301) dazu ausgebildet ist:
die Synchronisierungsressourcenperiode des innerhalb des Erfassungsbereichs befindlichen UE entsprechend in dem detektierten Synchronisierungskanal übertragenen Synchronisierungssignaldauerinformationen zu bestimmen; oder
einen Synchronisierungskanal von dem innerhalb des Erfassungsbereichs befindlichen UE zu detektieren, und die Synchronisierungsressourcenperiode des innerhalb des Erfassungsbereichs befindlichen UE entsprechend in dem detektierten Synchronisierungskanal übertragenen Synchronisierungssignalperiodeninformationen zu bestimmen.

7. Außerhalb des Erfassungsbereichs befindliches UE nach Anspruch 6, bei welchem die Anzahl von Subframes zwischen der Synchronisierungsressourcenstartposition des außerhalb des Erfassungsbereichs befindlichen UE und der Synchronisierungsressourcenstartposition des innerhalb des Erfassungsbereichs befindlichen UE ein konstanter Wert ist, oder entsprechend einer vorkonfigurierten Synchronisierungsressourcenstartposition des außerhalb des Erfassungsbereichs befindlichen UE bestimmt ist.

8. Außerhalb des Erfassungsbereichs befindliches UE nach Anspruch 6, bei welchem das Synchronisierungssignalübertragungsmodul (303) ferner dazu ausgebildet ist:
eine Synchronisierungsreferenz entsprechend dem von dem in dem Erfassungsbereich befindlichen UE übertragenen und kürzlich mindestens ein Mal detektierten Synchronisierungssignal zu erfassen; und
eine Synchronisierungsreferenz, welche es selbst zur Übertragung des Synchronisierungssignals verwendet, und/oder eine Synchronisierungsreferenz zu bestimmen, welche es selbst zur Übertragung eines Datensignals entsprechend der erfassten Synchronisierungsreferenz verwendet.

9. Außerhalb des Erfassungsbereichs befindliches UE nach Anspruch 6, bei welchem die Synchronisierungsressourcenperiode des innerhalb des Erfassungsbereichs befindlichen UE ein ganzzahliges Vielfaches der Synchronisierungsressourcenperiode des außerhalb des Erfassungsbereichs befindlichen UE ist.

10. Außerhalb des Erfassungsbereichs befindliches UE nach Anspruch 6, bei welchem das Synchronisierungssignaldetektionsmodul (301) ferner dazu ausgebildet ist:
eine Dauer des Synchronisierungssignals von dem innerhalb des Erfassungsbereichs befindlichen UE in einer Synchronisierungsressourcenperiode entsprechend in dem detektierten Synchronisierungssignal übertragenen Synchronisierungssignaldauerinformationen zu bestimmen, und im Fall des kontinuierlichen Detektierens des Synchronisierungssignals von dem innerhalb des Erfassungsbereichs befindlichen UE das Synchronisierungssignal von dem innerhalb des Erfassungsbereichs befindlichen UE in jeder Synchronisierungsressourcenperiode entsprechend der Dauer zu detektieren; oder
einen Synchronisierungskanal von dem innerhalb des Erfassungsbereichs befindlichen UE zu detektieren, und eine Dauer des Synchronisierungssignals des innerhalb des Erfassungsbereichs befindlichen UE in einer Synchronisierungsressourcenperiode entsprechend in dem detektierten Synchronisierungskanal übertragenen Synchronisierungssignaldauerinformationen zu bestimmen, und im Fall des kontinuierlichen Detektierens des Synchronisierungssignals des innerhalb des Erfassungsbereichs befindlichen UE das Synchronisierungssignal des innerhalb des Erfassungsbereichs befindlichen UE in jeder Synchronisierungsressourcenperiode entsprechend der Dauer zu detektieren.

11. Synchronisierungsverarbeitungsverfahren mit den folgenden Schritten:
Bestimmen, durch ein außerhalb eines Erfassungsbereichs befindliches Benutzergerät, UE, einer Synchronisierungsressourcenstartposition eines innerhalb des Erfassungsbereichs befindlichen UE, nachdem das außerhalb des Erfassungsbereichs befindliche UE ein Synchronisierungssignal von dem innerhalb des Erfassungsbereichs befindlichen UE erkannt hat (100);
Bestimmen, durch das außerhalb des Erfassungsbereichs befindliche UE, der eigenen Synchronisierungsressourcenstartposition entsprechend der Synchronisierungsressourcenstartposition des innerhalb des Erfassungsbereichs befindlichen UE (110); und
Übertragen, durch das außerhalb des Erfassungsbereichs befindliche UE, eines Synchronisierungssignals entsprechend der eigenen Synchronisierungsressourcenstartposition und der eigenen Synchronisierungsressourcenperiode (120),
**dadurch gekennzeichnet, dass** das Synchronisierungsverarbeitungsverfahren nach dem Erkennen des Synchronisierungssignals des innerhalb des Erfassungsbereichs befindlichen UE durch das außerhalb des Erfassungsbereichs befindliche UE, ferner die folgenden Schritte aufweist:
Bestimmen, durch das außerhalb des Erfassungsbereichs befindliche UE, einer Synchronisierungsressourcenperiode des innerhalb des Erfassungsbereichs befindlichen UE; und
kontinuierliches Detektieren, durch das außerhalb des Erfassungsbereichs befindliche UE, des Synchronisierungssignals des innerhalb des Erfassungsbereichs befindlichen UE entsprechend der Synchronisierungsressourcenstartposition und der Synchronisierungsressourcenperiode des innerhalb des Erfassungsbereichs befindlichen UE,
wobei der Schritt des Bestimmens der Synchronisierungsressourcenperiode des innerhalb des Erfassungsbereichs befindlichen UE durch das außerhalb des Erfassungsbereichs befindliche UE den folgenden Schritt aufweist:
Detektieren, durch das außerhalb des Erfassungsbereichs befindliche UE, des Synchronisierungssignals von dem innerhalb des Erfassungsbereichs befindlichen UE entsprechend der Synchronisierungsressourcenstartposition des innerhalb des Erfassungsbereichs befindlichen UE, und Bestimmen der Kandidaten-Synchronisierungsressourcenperiode des detektierten Synchronisierungssignals von dem innerhalb des Erfassungsbereichs befindlichen UE als die Synchronisierungsressourcenperiode des innerhalb des Erfassungsbereichs befindlichen UE.

12. Synchronisierungsverarbeitungsverfahren nach Anspruch 11, bei welchem die Anzahl von Subframes zwischen der Synchronisierungsressourcenstartposition des außerhalb des Erfassungsbereichs befindlichen UE und der Synchronisierungsressourcenstartposition des innerhalb des Erfassungsbereichs befindlichen UE ein konstanter Wert ist, oder entsprechend einer vorkonfigurierten Synchronisierungsressourcenstartposition des außerhalb des Erfassungsbereichs befindlichen UE bestimmt wird.

13. Synchronisierungsverarbeitungsverfahren nach Anspruch 11, ferner mit den folgenden Schritten:
Erfassen, durch das außerhalb des Erfassungsbereichs befindliche UE, einer Synchronisierungsreferenz entsprechend dem von dem innerhalb des Erfassungsbereichs befindlichen UE übertragenen und kürzlich mindestens ein Mal detektierten Synchronisierungssignal; und
Bestimmen, durch das außerhalb des Erfassungsbereichs befindliche UE, einer Synchronisierungsreferenz, welche es selbst zum Übertragen des Synchronisierungssignals verwendet, und/oder einer Synchronisierungsreferenz, welche es selbst zum Übertragen eines Datensignals entsprechend der erfassten Synchronisierungsreferenz verwendet.

14. Außerhalb eines Erfassungsbereichs befindliches Benutzergerät, UE, mit:
einem Synchronisierungssignaldetektionsmodul (301), das dazu ausgebildet ist, eine Synchronisierungsressourcenstartposition eines innerhalb des Erfassungsbereichs befindlichen UE zu bestimmen, nachdem das außerhalb des Erfassungsbereichs befindliche UE ein Synchronisierungssignal von dem innerhalb des Erfassungsbereichs befindlichen UE erkannt hat;
einem Synchronisierungsressourcenbestimmungsmodul (302), das dazu ausgebildet ist, die eigene Synchronisierungsressourcenstartposition entsprechend der Synchronisierungsressourcenstartposition des innerhalb des Erfassungsbereichs befindlichen UE zu bestimmen; und
einem Synchronisierungssignalübertragungsmodul (303), das dazu ausgebildet ist, ein Synchronisierungssignal entsprechend der eigenen Synchronisierungsressourcenstartposition und der eigenen Synchronisierungsressourcenperiode zu übertragen,
**dadurch gekennzeichnet, dass** das Synchronisierungssignaldetektionsmodul (301) ferner dazu ausgebildet ist:
eine Synchronisierungsressourcenperiode des innerhalb des Erfassungsbereichs befindlichen UE zu bestimmen; und
das Synchronisierungssignal von dem innerhalb des Erfassungsbereichs befindlichen UE entsprechend der Synchronisierungsressourcenstartposition und der Synchronisierungsressourcenperiode des innerhalb des Erfassungsbereichs befindlichen UE kontinuierlich zu detektieren,
wobei im Falle des Bestimmens der Synchronisierungsressourcenperiode des innerhalb des Erfassungsbereichs befindlichen UE das Synchronisierungssignaldetektionsmodul (301) dazu ausgebildet ist:
das Synchronisierungssignal von dem innerhalb des Erfassungsbereichs befindlichen UE entsprechend der Synchronisierungsressourcenstartposition des innerhalb des Erfassungsbereichs befindlichen UE und jede Kandidaten-Synchronisierungsressourcenperiode des innerhalb des Erfassungsbereichs befindlichen UE zu detektieren, und die Kandidaten-Synchronisierungsressourcenperiode des detektierten Synchronisierungssignals von dem innerhalb des Erfassungsbereichs befindlichen UE als die Synchronisierungsressourcenperiode des innerhalb des Erfassungsbereichs befindlichen UE zu bestimmen.

15. Außerhalb des Erfassungsbereichs befindliches UE nach Anspruch 14, bei welchem die Anzahl von Subframes zwischen der Synchronisierungsressourcenstartposition des außerhalb des Erfassungsbereichs befindlichen UE und der Synchronisierungsressourcenstartposition des innerhalb des Erfassungsbereichs befindlichen UE ein konstanter Wert ist, oder entsprechend einer vorkonfigurierten Synchronisierungsressourcenstartposition des außerhalb des Erfassungsbereichs befindlichen UE bestimmt ist.

## Revendications

1. Procédé de traitement de synchronisation, comprenant les étapes consistant à :
déterminer, par un équipement utilisateur, UE, en dehors d'une zone de couverture, une position de départ de ressource de synchronisation d'un UE à l'intérieur de la zone de couverture après que l'UE en dehors de la zone de couverture a détecté un signal de synchronisation provenant de l'UE à l'intérieur de la zone de couverture (100) ;
déterminer, par l'UE en dehors de la zone de couverture, sa propre position de départ de ressource de synchronisation conformément à la position de départ de ressource de synchronisation de l'UE à l'intérieur de la zone de couverture (110) ; et
émettre, par l'UE en dehors de la zone de couverture, un signal de synchronisation conformément à sa propre position de départ de ressource de synchronisation et à sa propre période de ressource de synchronisation (120),
**caractérisé en ce que** suite à la détection, par l'UE en dehors de la zone de couverture, du signal de synchronisation provenant de l'UE à l'intérieur de la zone de couverture, le procédé de traitement de synchronisation comprend en outre :
la détermination, par l'UE en dehors de la zone de couverture, d'une période de ressource de synchronisation de l'UE à l'intérieur de la zone de couverture ; et
la détection, par l'UE en dehors de la zone de couverture, en continu du signal de synchronisation provenant de l'UE à l'intérieur de la zone de couverture conformément à la position de départ de ressource de synchronisation et à la période de ressource de synchronisation de l'UE à l'intérieur de la zone de couverture,
l'étape de détermination, par l'UE en dehors de la zone de couverture, de la période de ressource de synchronisation de l'UE à l'intérieur de la zone de couverture comprenant :
la détermination, par l'UE en dehors de la zone de couverture, de la période de ressource de synchronisation de l'UE à l'intérieur de la zone de couverture conformément à des informations de période de ressource de synchronisation transportées dans le signal de synchronisation détecté ; ou
la détection, par l'UE en dehors de la zone de couverture, d'un canal de synchronisation provenant de l'UE à l'intérieur de la zone de couverture, et la détermination de la période de ressource de synchronisation de l'UE à l'intérieur de la zone de couverture conformément aux informations de période de ressource de synchronisation transportées dans le canal de synchronisation détecté.

2. Procédé de traitement de synchronisation selon la revendication 1, dans lequel le nombre de sous-trames entre la position de départ de ressource de synchronisation de l'UE en dehors de la zone de couverture et la position de départ de ressource de synchronisation de l'UE à l'intérieur de la zone de couverture est une valeur constante, ou est déterminé conformément à une position de départ de ressource de synchronisation préconfigurée de l'UE en dehors de la zone de couverture.

3. Procédé de traitement de synchronisation selon la revendication 1, comprenant en outre :
l'acquisition, par l'UE en dehors de la zone de couverture, d'une référence de synchronisation conformément au signal de synchronisation émis par l'UE à l'intérieur de la zone de couverture et détecté récemment au moins une fois ; et
la détermination, par l'UE en dehors de la zone de couverture, d'une référence de synchronisation utilisée seule pour l'émission du signal de synchronisation et/ou d'une référence de synchronisation utilisée seule pour l'émission d'un signal de données conformément à la référence de synchronisation acquise.

4. Procédé de traitement de synchronisation selon la revendication 1, dans lequel la période de ressource de synchronisation de l'UE à l'intérieur de la zone de couverture est un multiple entier de la période de ressource de synchronisation de l'UE en dehors de la zone de couverture.

5. Procédé de traitement de synchronisation selon la revendication 1, comprenant en outre :
la détermination, par l'UE en dehors de la zone de couverture, d'une durée du signal de synchronisation provenant de l'UE à l'intérieur de la zone de couverture dans une période de ressource de synchronisation conformément à des informations de durée de signal de synchronisation transportées dans le signal de synchronisation détecté, l'étape de détection en continu du signal de synchronisation provenant de l'UE à l'intérieur de la zone de couverture comprenant la détection du signal de synchronisation provenant de l'UE à l'intérieur de la zone de couverture dans chaque période de ressource de synchronisation conformément à la durée ; ou
la détection, par l'UE en dehors de la zone de couverture, d'un canal de synchronisation provenant de l'UE à l'intérieur de la zone de couverture, et la détermination d'une durée du signal de synchronisation provenant de l'UE à l'intérieur de la zone de couverture dans une période de ressource de synchronisation conformément à des informations de durée de signal de synchronisation transportées dans le canal de synchronisation détecté, l'étape de détection en continu du signal de synchronisation provenant de l'UE à l'intérieur de la zone de couverture comprenant la détection du signal de synchronisation provenant de l'UE à l'intérieur de la zone de couverture dans chaque période de ressource de synchronisation conformément à la durée.

6. Équipement utilisateur, UE, en dehors d'une zone de couverture, comprenant :
un module de détection de signal de synchronisation (301) configuré pour déterminer une position de départ de ressource de synchronisation d'un UE à l'intérieur de la zone de couverture après que l'UE en dehors de la zone de couverture a détecté un signal de synchronisation provenant de l'UE à l'intérieur de la zone de couverture ;
un module de détermination de ressource de synchronisation (302) configuré pour déterminer sa propre position de départ de ressource de synchronisation conformément à la position de départ de ressource de synchronisation de l'UE à l'intérieur de la zone de couverture ; et
un module d'émission de signal de synchronisation (303) configuré pour émettre un signal de synchronisation conformément à sa propre position de départ de ressource de synchronisation et à sa propre période de ressource de synchronisation,
**caractérisé en ce que** le module de détection de signal de synchronisation (301) est en outre configuré pour :
déterminer une période de ressource de synchronisation de l'UE à l'intérieur de la zone de couverture ; et
détecter en continu le signal de synchronisation provenant de l'UE à l'intérieur de la zone de couverture conformément à la position de départ de ressource de synchronisation et à la période de ressource de synchronisation de l'UE à l'intérieur de la zone de couverture,
dans le cas de la détermination de la période de ressource de synchronisation de l'UE à l'intérieur de la zone de couverture, le module de détection de signal de synchronisation (301) étant configuré pour :
déterminer la période de ressource de synchronisation de l'UE à l'intérieur de la zone de couverture conformément à des informations de période de ressource de synchronisation transportées dans le signal de synchronisation détecté ; ou
détecter un canal de synchronisation provenant de l'UE à l'intérieur de la zone de couverture, et déterminer la période de ressource de synchronisation de l'UE à l'intérieur de la zone de couverture conformément à des informations de période de ressource de synchronisation transportées dans le canal de synchronisation détecté.

7. UE en dehors de la zone de couverture selon la revendication 6, dans lequel le nombre de sous-trames entre la position de départ de ressource de synchronisation de l'UE en dehors de la zone de couverture et la position de départ de ressource de synchronisation de l'UE à l'intérieur de la zone de couverture est une valeur constante, ou déterminé conformément à une position de départ de ressource de synchronisation préconfigurée de l'UE en dehors de la zone de couverture.

8. UE en dehors de la zone de couverture selon la revendication 6, dans lequel le module d'émission de signal de synchronisation (303) est en outre configuré pour :
acquérir une référence de synchronisation conformément au signal de synchronisation émis par l'UE à l'intérieur de la zone de couverture et détecté récemment au moins une fois ; et
déterminer une référence de synchronisation utilisée seule pour l'émission du signal de synchronisation et/ou une référence de synchronisation utilisée seule pour l'émission d'un signal de données conformément à la référence de synchronisation acquise.

9. UE en dehors de la zone de couverture selon la revendication 6, dans lequel la période de ressource de synchronisation de l'UE à l'intérieur de la zone de couverture est un multiple entier de la période de ressource de synchronisation de l'UE en dehors de la zone de couverture.

10. UE en dehors de la zone de couverture selon la revendication 6, dans lequel le module de détection de signal de synchronisation (301) est en outre configuré pour :
déterminer une durée du signal de synchronisation provenant de l'UE à l'intérieur de la zone de couverture dans une période de ressource de synchronisation conformément à des informations de durée de signal de synchronisation transportées dans le signal de synchronisation détecté, et dans le cas de la détection en continu du signal de synchronisation provenant de l'UE à l'intérieur de la zone de couverture, détecter le signal de synchronisation provenant de l'UE à l'intérieur de la zone de couverture dans chaque période de ressource de synchronisation conformément à la durée ; ou
détecter un canal de synchronisation provenant de l'UE à l'intérieur de la zone de couverture, et déterminer une durée du signal de synchronisation provenant de l'UE à l'intérieur de la zone de couverture dans une période de ressource de synchronisation conformément à des informations de durée de signal de synchronisation transportées dans le canal de synchronisation détecté, et dans le cas de la détection en continu du signal de synchronisation provenant de l'UE à l'intérieur de la zone de couverture, détecter le signal de synchronisation provenant de l'UE à l'intérieur de la zone de couverture dans chaque période de ressource de synchronisation conformément à la durée.

11. Procédé de traitement de synchronisation, comprenant les étapes consistant à :
déterminer, par un équipement utilisateur, UE, en dehors d'une zone de couverture, une position de départ de ressource de synchronisation d'un UE à l'intérieur de la zone de couverture après que l'UE en dehors de la zone de couverture a détecté un signal de synchronisation provenant de l'UE à l'intérieur de la zone de couverture (100) ;
déterminer, par l'UE en dehors de la zone de couverture, sa propre position de départ de ressource de synchronisation conformément à la position de départ de ressource de synchronisation de l'UE à l'intérieur de la zone de couverture (110) ; et
émettre, par l'UE en dehors de la zone de couverture, un signal de synchronisation conformément à sa propre position de départ de ressource de synchronisation et à sa propre période de ressource de synchronisation (120),
**caractérisé en ce que** suite à la détection, par l'UE en dehors de la zone de couverture, du signal de synchronisation provenant de l'UE à l'intérieur de la zone de couverture, le procédé de traitement de synchronisation comprend en outre :
la détermination, par l'UE en dehors de la zone de couverture, d'une période de ressource de synchronisation de l'UE à l'intérieur de la zone de couverture ; et
la détection, par l'UE en dehors de la zone de couverture, en continu du signal de synchronisation provenant de l'UE à l'intérieur de la zone de couverture conformément à la position de départ de ressource de synchronisation et à la période de ressource de synchronisation de l'UE à l'intérieur de la zone de couverture,
l'étape de détermination, par l'UE en dehors de la zone de couverture, de la période de ressource de synchronisation de l'UE à l'intérieur de la zone de couverture comprenant :
la détection, par l'UE en dehors de la zone de couverture, du signal de synchronisation provenant de l'UE à l'intérieur de la zone de couverture conformément à la position de départ de ressource de synchronisation de l'UE à l'intérieur de la zone de couverture et à chaque période de ressource de synchronisation candidate de l'UE à l'intérieur de la zone de couverture, et la détermination de la période de ressource de synchronisation candidate du signal de synchronisation détecté provenant de l'UE à l'intérieur de la zone de couverture comme période de ressource de synchronisation de l'UE à l'intérieur de la zone de couverture.

12. Procédé de traitement de synchronisation selon la revendication 11, dans lequel le nombre de sous-trames entre la position de départ de ressource de synchronisation de l'UE en dehors de la zone de couverture et la position de départ de ressource de synchronisation de l'UE à l'intérieur de la zone de couverture est une valeur constante, ou déterminé conformément à une position de départ de ressource de synchronisation préconfigurée de l'UE en dehors de la zone de couverture.

13. Procédé de traitement de synchronisation selon la revendication 11, comprenant en outre :
l'acquisition, par l'UE en dehors de la zone de couverture, d'une référence de synchronisation conformément au signal de synchronisation émis par l'UE à l'intérieur de la zone de couverture et détecté récemment au moins une fois ; et
la détermination, par l'UE en dehors de la zone de couverture, d'une référence de synchronisation utilisée seule pour l'émission du signal de synchronisation et/ou d'une référence de synchronisation utilisée seule pour l'émission d'un signal de données conformément à la référence de synchronisation acquise.

14. Équipement utilisateur, UE, en dehors d'une zone de couverture, comprenant :
un module de détection de signal de synchronisation (301) configuré pour déterminer une position de départ de ressource de synchronisation d'un UE à l'intérieur de la zone de couverture après que l'UE en dehors de la zone de couverture a détecté un signal de synchronisation provenant de l'UE à l'intérieur de la zone de couverture ;
un module de détermination de ressource de synchronisation (302) configuré pour déterminer sa propre position de départ de ressource de synchronisation conformément à la position de départ de ressource de synchronisation de l'UE à l'intérieur de la zone de couverture ; et
un module d'émission de signal de synchronisation (303) configuré pour émettre un signal de synchronisation conformément à sa propre position de départ de ressource de synchronisation et à sa propre période de ressource de synchronisation,
**caractérisé en ce que** le module de détection de signal de synchronisation (301) est en outre configuré pour :
déterminer une période de ressource de synchronisation de l'UE à l'intérieur de la zone de couverture ; et
détecter en continu le signal de synchronisation provenant de l'UE à l'intérieur de la zone de couverture conformément à la position de départ de ressource de synchronisation et à la période de ressource de synchronisation de l'UE à l'intérieur de la zone de couverture,
dans le cas de la détermination de la période de ressource de synchronisation de l'UE à l'intérieur de la zone de couverture, le module de détection de signal de synchronisation (301) étant configuré pour :
détecter le signal de synchronisation provenant de l'UE à l'intérieur de la zone de couverture conformément à la position de départ de ressource de synchronisation de l'UE à l'intérieur de la zone de couverture et à chaque période de ressource de synchronisation candidate de l'UE à l'intérieur de la zone de couverture, et déterminer la période de ressource de synchronisation candidate du signal de synchronisation détecté provenant de l'UE à l'intérieur de la zone de couverture comme période de ressource de synchronisation de l'UE à l'intérieur de la zone de couverture.

15. UE en dehors de la zone de couverture selon la revendication 14, dans lequel le nombre de sous-trames entre la position de départ de ressource de synchronisation de l'UE en dehors de la zone de couverture et la position de départ de ressource de synchronisation de l'UE à l'intérieur de la zone de couverture est une valeur constante, ou déterminé conformément à une position de départ de ressource de synchronisation préconfigurée de l'UE en dehors de la zone de couverture.
